# EUROPÄISCHE PATENTSCHRIFT

(11) **EP 3 516 250 B1**
(45) Veröffentlichungstag und Bekanntmachung des Hinweises auf die Patenterteilung: **20.12.2023**
(21) Anmeldenummer: 17717619.5
(22) Anmeldetag: 03.03.2017
(51) Int. Cl.: F16D 21/06

(54) **MEHRFACHKUPPLUNGSEINRICHTUNG UND HYBRIDMODUL FÜR EIN KRAFTFAHRZEUG**
MULTI-CLUTCH SYSTEM AND HYBRID MODULE FOR A MOTOR VEHICLE
SYSTÈME D'EMBRAYAGE MULTIPLE ET MODULE HYBRIDE POUR VÉHICULE AUTOMOBILE

(30) Priorität: 20.09.2016 DE 102016217974
(43) Veröffentlichungstag der Anmeldung: 31.07.2019
(73) Patentinhaber: Schaeffler Technologies AG & Co. KG, 91074 Herzogenaurach (DE)
(72) Erfinder: HOFSTETTER, Dirk, 76448 Durmersheim (DE)
(86) Internationale Anmeldenummer: PCT/DE2017/100166
(87) Internationale Veröffentlichungsnummer: WO 2018/054411

(56) Entgegenhaltungen:
- EP-A1- 2 517 915
- WO-A2-2017/028862
- DE-A1-102009 059 944

## Beschreibung

Die Erfindung betrifft eine Mehrfachkupplungseinrichtung für ein Hybridmodul, welches für ein Kraftfahrzeug, wie z.B. einen Pkw, einen Lkw oder ein anderes Nutzfahrzeug vorgesehen ist, und welches an eine Verbrennungskraftmaschine anzukoppeln ist. Des Weiteren betrifft die Erfindung das Hybridmodul selbst, das die Mehrfachkupplungseinrichtung aufweist.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie einer Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors. Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Eine solche Anordnung führt jedoch gelegentlich zu Bauraumproblemen.

Um ein sehr kompaktes Hybridmodul mit integrierter Doppelkupplung zu realisieren, besteht ein vorteilhaftes Bauprinzip darin, die Trennkupplung und die beiden Teilkupplungen der Doppelkupplung direkt nebeneinander anzuordnen.

Aus dem Stand der Technik sind verschiedenste Ausführungsformen von Hybridmodulen bzw. deren Mehrfachkupplungseinrichtungen bekannt.

So offenbart die DE 10 2009 002 805 A1 einen Parallel-Hybridantrieb für Kraftfahrzeuge mit einem im Antriebsstrang angeordneten Fahrzeuggetriebe mit veränderlicher Übersetzung, einer mit der Getriebeeingangswelle antriebsverbundenen Elektromaschine und mit einem über eine Kupplungsanordnung mit der Getriebeeingangswelle kuppelbaren bzw. von dieser abkuppelbaren Verbrennungsmotor. Die Kupplungsanordnung umfasst weiterhin eine im Zugbetrieb des Verbrennungsmotors einkuppelnde Freilaufkupplung und eine dazu parallele schaltbare Reibungskupplung.

Die WO2008/052909 A1 offenbart einen Antriebsstrang für ein Hybridfahrzeug zur mechanischen Kopplung eines Verbrennungsmotors mit einer elektrischen Maschine mittels einer Kupplung. Die Kupplung kann eine Klauenkupplung umfassen, sowie ein Anfahrelement, das mit der elektrischen Maschine verbunden ist und wählbare Anteile der Antriebsleistung aus der elektrischen Maschine auskoppelt. Das Anfahrelement kann ein Wandler, eine Proportionalkupplung und/oder eine Doppelkupplung umfassen.

Aus der noch nicht veröffentlichten deutschen Patentanmeldung DE 10 2016 203 384.0 ist eine Kupplungsanordnung für einen Antriebsstrang eines Kraftfahrzeuges mit Hybridantrieb bekannt, wobei diese Kupplungsanordnung eine erste Kupplung und eine zweite Kupplung aufweist, die jeweils rotatorisch voneinander entkoppelbare Drehteile aufweisen, wobei ein erstes Drehteil der ersten Kupplung mit einem ersten Drehteil der zweiten Kupplung drehfest verbunden ist. Es ist hier als vorteilhafte Ausführungsform angegeben, dass die zweite Kupplung als Doppelkupplung, vorzugsweise als nasse bzw. nasslaufende Doppelkupplung ausgebildet ist.

Die deutsche Patentanmeldung DE 10 2016 212 846.9 lehrt eine Kupplungsanordnung für einen Antriebsstrang eines Kraftfahrzeuges mit einer Elektromaschine und einer Verbrennungskraftmaschine, deren Drehmoment zu einem Getriebe durch ein Kupplungsaggregat leitbar ist, wobei eine Trennkupplung zwischen einem Koppelorgan, das zum Einleiten von Drehmoment der Elektromaschine in Richtung des Kupplungsaggregates vorbereitet ist, und einem verbrennungskraftmaschinen-seitig antreibbaren Übertragungsorgan angeordnet ist. Ein als Kette ausgebildetes Endloszugmittel ist zur Übertragung eines Drehmoments von der Elektromaschine zum Koppelorgan eingesetzt.

Sämtliche der dargestellten Hybridmodule bzw. Kupplungseinrichtungen sind einem betriebsbedingten Verschleiß unterworfen und benötigen einen bestimmten Bauraum.

Der vorliegenden Erfindung liegt die Aufgabe zugrunde, eine Mehrfachkupplungseinrichtung sowie ein mit der Mehrfachkupplungseinrichtung ausgestattetes Hybridmodul für ein Kraftfahrzeug zur Verfügung zu stellen, die mit geringem Bauraum eine lange Lebensdauer aufweisen.

Diese Aufgabe wird durch die erfindungsgemäße Mehrfachkupplungseinrichtung nach Anspruch 1 sowie durch das erfindungsgemäße Hybridmodul nach Anspruch 9 gelöst. Vorteilhafte Ausführungsformen der Mehrfachkupplungseinrichtung sind in den Unteransprüchen 2 bis 8 angegeben. Eine vorteilhafte Ausgestaltung des Hybridmoduls ist in Unteranspruch 10 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe radial und axial beziehen sich im Rahmen der vorliegenden Erfindung immer auf die Rotationsachse der Mehrfachkupplungseinrichtung bzw. des Hybridmoduls.

Die Erfindung betrifft eine Mehrfachkupplungseinrichtung für ein Hybridmodul zum Ankoppeln einer Verbrennungskraftmaschine, die eine Trennkupplung, mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist, sowie eine Doppelkupplungsvorrichtung, mit der Drehmoment von einer elektrischen Maschine und/ oder von der Trennkupplung auf einen Antriebsstrang übertragbar ist, umfasst. Die Doppelkupplungsvorrichtung weist eine erste Teilkupplung und eine zweite Teilkupplung auf; sowie ein Getriebeelement zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung. Die einzelnen Kupplungen und das Getriebeelement sind in einem Nassraum angeordnet. Diese Bauweise ermöglicht den Einsatz von verschleißgeminderten Nasskupplungen, ohne auf eine Kombination mit dem Betrieb eines Elektromotors zur Ausbildung eines Hybridmoduls verzichten zu müssen.

Die Mehrfachkupplungseinrichtung kann derart ausgestaltet sein, dass die Kupplungen sowie das Getriebeelement um eine gemeinsame Rotationsachse koaxial angeordnet sind und der wirksame Durchmesser des Getriebeelementes größer ist als der wirksame Durchmesser der mittels Reibschluss Drehmoment übertragenen Bestandteile einer jeweiligen Teilkupplung der Doppelkupplungsvorrichtung. Das heißt, dass durch eine radial äußere Anordnung des wirksamen Teilkreises des Getriebeelementes in Bezug zu den Teilkupplungen der radiale Abstand des wirksamen Teilkreises des Getriebeelementes, in dem das Drehmoment vom Getriebeelement übertragen wird, größer ist als der radiale Abstand der Lamellen der Teilkupplungen zur Rotationsachse, mit denen durch Reibschluss Drehmoment innerhalb der jeweiligen Kupplung übertragen wird. Damit lässt sich eine radial sehr kompakte Mehrfachkupplungseinrichtung bzw. ein radial sehr kompaktes Hybridmodul zur Verfügung stellen.

Die Trennkupplung kann von der Doppelkupplungsvorrichtung radial überlagert sein. Das bedeutet, dass die Trennkupplung sowie die Doppelkupplungsvorrichtung radial ineinander verschachtelt angeordnet sind, wobei die Trennkupplung und die Doppelkupplungsvorrichtung entlang der gemeinsamen Rotationsachse im Wesentlichen die gleiche Axialposition aufweisen, jedoch radial unterschiedliche Positionen bzw. Erstreckungsmaße aufweisen.

Dabei kann die Trennkupplung in Bezug zu der Doppelkupplungsvorrichtung radial innen angeordnet sein, und die beiden Teilkupplungen der Doppelkupplungsvorrichtung können im Wesentlichen axial nebeneinander angeordnet sein. Demzufolge sind die beiden Teilkupplungen in Bezug zur Trennkupplung weiter außen und entsprechend an deren radialer Außenseite angeordnet, wobei die beiden Teilkupplungen radial im Wesentlichen den gleichen Abstand zur Rotationsachse aufweisen.

In einer weiteren vorteilhaften Ausführungsform ist vorgesehen, dass die Mehrfachkupplungseinrichtung ein Trennkupplungsbetätigungssystem zur Betätigung der Trennkupplung aufweist, wobei das Trennkupplungsbetätigungssystem eine im Wesentlichen ringförmige Kolben-Zylinder-Einheit aufweist, deren Kolben im Wesentlichen axial translatorisch verschiebbar ist, und weiterhin ein ringförmiges Betätigungslager aufweist, welches eine rotatorische Relativbewegung zwischen der Kolben-Zylinder-Einheit und einem zu betätigenden Kupplungselement der Trennkupplung erlaubt. Die Kolben-Zylinder-Einheit ist dabei in oder an einem Gehäuse aufgenommen, welches mechanisch fest mit einem Kupplungsdeckel der Mehrfachkupplungseinrichtung verbunden ist, wobei am Gehäuse ein erstes Rotationslager angeordnet ist zur rotatorischen Lagerung einer Kupplungseingangswelle, sowie ein zweites Rotationslager angeordnet ist zur rotatorischen Lagerung eines gemeinsamen Rotationsteils der Kupplungen der Mehrfachkupplungseinrichtung. Dabei ist die ringförmige Kolben-Zylinder-Einheit radial zwischen dem ersten Lager und dem zweiten Lager angeordnet. Auch damit wird eine Volumenreduzierung in axialer Richtung bewirkt. Die Antriebswelle ist dabei die Welle, mit der die Mehrfachkupplungseinrichtung mit einem Verbrennungsaggregat rotatorisch verbindbar ist. Das gemeinsame Rotationsteil ist ein Element der Mehrfachkupplungseinrichtung, welches der Übertragung von Drehmoment zwischen der Doppelkupplungsvorrichtung und der Trennkupplung dient. Das Gehäuse kann ein integraler Bestandteil des Kupplungsdeckels sein.

Das erste Rotationslager stützt von der Trennkupplung aufgebrachte bzw. übertragene axiale Kräfte ab. Zusammen mit einem weiteren Nadellager ist das erste Rotationslager ausgebildet, eine Kupplungseingangswelle abzustützen, mit der ein anzuschließendes Verbrennungsaggregat mit der Mehrfachkupplungseinrichtung rotatorisch koppelbar ist. Das zweite Rotationslager stützt von den Teilkupplungen aufgebrachte bzw. übertragene axiale Kräfte ab und nimmt die vom Getriebeelement aufgenommene resultierende Kraft auf.

Weiterhin sollte die Mehrfachkupplungseinrichtung ein erstes Betätigungssystem zur Betätigung der ersten Teilkupplung und ein zweites Betätigungssystem zur Betätigung der zweiten Teilkupplung aufweisen, wobei das erste Betätigungssystem und das zweite Betätigungssystem einander radial zumindest abschnittsweise überlagern. Das heißt, dass hier für die Doppelkupplungsvorrichtung ein radial geschachtelter Doppel-Zentraleinrücker oder -ausrücker zur Anwendung kommen kann. Dabei kann vorgesehen sein, dass beide Betätigungssysteme jeweils eine im Wesentlichen ringförmige Kolben-Zylinder-Einheit aufweisen, deren Kolben im Wesentlichen axial translatorisch verschiebbar ist, und weiterhin jeweils ein ringförmiges Betätigungslager aufweisen, welches eine rotatorische Relativbewegung zwischen der Kolben-Zylinder-Einheit und einem zu betätigenden Kupplungselement der jeweiligen Teilkupplung erlaubt, wobei die radiale Erstreckung einer jeweiligen Kolben-Zylinder-Einheit in Bezug zur Rotationsachse größer ist als der Abstand einer Umlaufbahn eines jeweiligen Betätigungslagers zur Rotationsachse. In alternativer Ausgestaltung ist vorgesehen, dass die radialen Erstreckungen der jeweiligen Kolben-Zylinder-Einheiten und der Umlaufbahnen gleich sind.

In weiterer Ausführungsform ist vorgesehen, dass die Mehrfachkupplungseinrichtung ein Stützlager aufweist, welches entlang der Rotationsachse an der Seite der Position des ersten Betätigungssystems und des zweiten Betätigungssystems angeordnet ist, vorzugsweise vom ersten Betätigungssystem und zweiten Betätigungssystem radial überdeckt ist, und welches auf einer Getriebeeingangswelle abgestützt oder abstützbar ist. Die Getriebeeingangswelle ist vorzugsweise eine Getriebeeingangswelle eines Doppelkupplungsgetriebes, welches mit der Mehrfachkupplungseinrichtung bzw. einem damit ausgeführten Hybridmodul gekoppelt ist. Das Stützlager ist somit derart angeordnet und ausgebildet, dass es sich radial auf einer solchen Getriebeeingangswelle abstützen kann. In alternativer Ausgestaltung ist eine Abstützung an einem Gehäuse, in oder an welchem die Betätigungssysteme der beiden Teilkupplungen angeordnet sind, über das Stützlager möglich. Mit dem Stützlager ist ein unbeabsichtigtes Verkippen der gesamten Mehrfachkupplungseinrichtung verhinderbar.

Das Getriebeelement kann ein Kettenrad zur Ausbildung eines Kettentriebes; ein Riemenrad zur Ausbildung eines Riementriebes; oder ein Zahnrad zur Ausbildung eines Zahnradgetriebes sein. In der Ausführungsform als Riemenrad bietet es sich an, den Riementrieb als Zahnriementrieb oder Keilriementrieb auszugestalten. Ein realisiertes Zahnradgetriebe kann einstufig oder mehrstufig ausgeführt sein.

Zur Lösung der Aufgabe wird außerdem ein Hybridmodul zur Verfügung gestellt, umfassend eine erfindungsgemäße Mehrfachkupplungseinrichtung sowie eine elektrische Maschine zur Erzeugung eines Antriebsdrehmoments mit einem Rotor, wobei der Rotor in Bezug zur Rotationsachse der Mehrfachkupplungseinrichtung achsparallel angeordnet ist und mittels eines Getriebes, welches das Getriebeelement der Mehrfachkupplungseinrichtung umfasst, mit der Mehrfachkupplungseinrichtung verbunden ist. Mit dem Getriebe kann somit ein Drehmoment bzw. eine Drehbewegung von der elektrischen Maschine auf die Mehrfachkupplungseinrichtung zum Antrieb der Mehrfachkupplungseinrichtung und demzufolge eines Antriebsmoduls, bzw. in umgekehrter Richtung von der Mehrfachkupplungseinrichtung auf die elektrische Maschine zwecks Rekuperation erfolgen.

Das Hybridmodul kann derart ausgestaltet sein, dass der Rotor der elektrischen Maschine außerhalb des Nassraums angeordnet ist und mit einem weiteren Getriebeelement rotationsfest verbindbar oder verbunden ist, welches zusammen mit dem Getriebeelement der Mehrfachkupplungseinrichtung das Getriebe ausbildet, und dass das weitere Getriebeelement ebenfalls im Nassraum angeordnet ist und zwischen dem weiteren Getriebeelement und dem Rotor der elektrischen Maschine eine Dichtung zur Abdichtung des Nassraums angeordnet ist.

Ergänzend wird eine Antriebsanordnung für ein Kraftfahrzeug mit einer Verbrennungskraftmaschine und einem erfindungsgemäßen Hybridmodul sowie mit einem Fahrzeuggetriebe zur Verfügung gestellt, wobei das Hybridmodul mit der Verbrennungskraftmaschine und dem Fahrzeuggetriebe mechanisch über Kupplungen des Hybridmoduls verbunden ist.

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt ist.

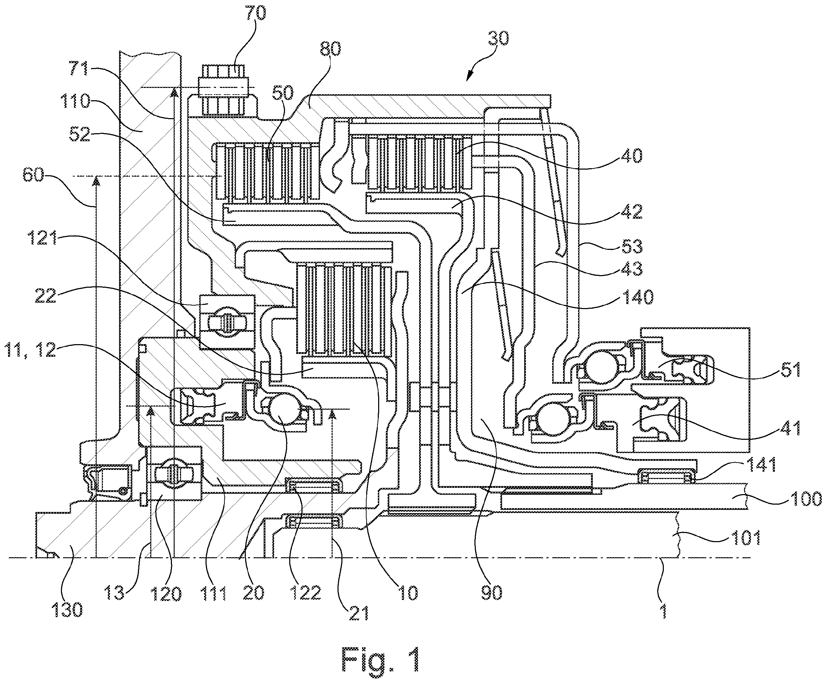

Es zeigt die einzige Figur 1 eine erfindungsgemäße Mehrfachkupplungseinrichtung in einem Teilschnitt.

Ersichtlich ist, dass auf einer gemeinsamen Rotationsachse 1 eine Trennkupplung 10 sowie eine Doppelkupplungsvorrichtung 30 angeordnet sind. Die Doppelkupplungsvorrichtung 30 umfasst eine erste Teilkupplung 40 und eine zweite Teilkupplung 50. Alle drei Kupplungen 10,40,50 sind in einem Nassraum 90 angeordnet. Das bedeutet, dass alle drei Kupplungen 10,40,50 alle als Nasskupplungen ausgeführt sind. Des Weiteren sind alle drei Kupplungen 10,40,50 über ein gemeinsames Rotationsteil 80 rotatorisch miteinander gekoppelt.

An dem gemeinsamen Rotationsteil 80 ist ein Getriebeelement 70 fest angeordnet, welches in der hier dargestellten Ausführungsform ein Kettenrad zur Ausbildung eines Kettentriebes ist. Dieser Kettentrieb ist mit einem Ritzel einer hier nicht dargestellten elektrischen Maschine verbunden, die außerhalb des Nassraums 90 angeordnet ist. Derart lässt sich von der elektrischen Maschine auf das gemeinsame Rotationsteil 80 und demzufolge auf alle drei Kupplungen 10,40, 50 Drehmoment übertragen, und in umgekehrter Richtung. Zwischen dem der elektrischen Maschine zugeordneten Ritzel und dem Rotor der elektrischen Maschine ist eine hier nicht dargestellte Dichtung zur Abdichtung des Nassraums 90 angeordnet.

Der Trennkupplung 10 ist ein Trennkupplungsbetätigungssystem 11 zugeordnet, welches eine ringförmige Kolben-Zylinder-Einheit 12 sowie ein Betätigungslager 20 umfasst. Die radiale Erstreckung 13 der Kolben-Zylinder-Einheit 12 ist dabei genauso groß wie der radiale Abstand der Umlaufbahn 21 des Betätigungslagers 20 zur Rotationsachse 1. Dies ermöglicht die dargestellte axiale Anordnung der Kolben-Zylinder-Einheit 12 und des Betätigungslagers 20 nebeneinander.

Es ist ersichtlich, dass der wirksame Durchmesser 71 des Getriebeelementes 70 größer ist als der wirksame Durchmesser 60 der mittels Reibschluss Drehmoment übertragenen Bestandteile der Doppelkupplungsvorrichtung 30 bzw. deren erster Teilkupplung 40 und zweiter Teilkupplung 50. Aufgrund des relativ großen Abstandes zur Rotationsachse 1 ist es möglich, die elektrische Maschine mit einer relativ geringen Antriebsleistung bzw. daraus resultierenden Drehmoment auszugestalten. Dies sowie die Möglichkeit, die elektrische Maschine achsparallel beabstandet zur Rotationsachse anzuordnen, ermöglicht die Realisierung eines sehr bauraumeffizienten Hybridmoduls bzw. der flexibleren Anordnung der Aggregate des Hybridmoduls einem Antriebsstrang eines Kraftfahrzeugs.

Ein der ersten Teilkupplung 40 zugeordnetes erstes Betätigungssystem 41 und der zweiten Teilkupplung 50 zugeordnetes zweites Betätigungssystem 51 sind radial ineinander verschachtelt angeordnet, wobei jedoch auch eine axial nebeneinander realisierte Anordnung nicht ausgeschlossen werden soll.

Durch die dargestellten Maßnahmen ist insgesamt eine radial sehr kompakt bauende Kupplungseinrichtung realisierbar.

Von einer Antriebswelle bzw. Kupplungseingangswelle 130, die mit einem hier nicht dargestellten Verbrennungsaggregat koppelbar ist, kann Drehmoment in die Trennkupplung 10 über deren Trennkupplung-Lamellenträger 22 eingeleitet werden. Bei Schließung der Trennkupplung 10 mittels Betätigung des Trennkupplungsbetätigungssystems 11 wird von der Trennkupplung 10 Drehmoment auf das gemeinsame Rotationsteil 80 übertragen. Je nach Schließung einer der mit dem gemeinsamen Rotationsteil 80 verbundenen Teilkupplung 40,50 wird von dieser Teilkupplung 40,50 Drehmoment über einen jeweiligen ersten Lamellenträger 42 bzw. zweiten Lamellenträger 52 auf eine erste Getriebeeingangswelle 100 bzw. auf eine zweite Getriebeeingangswelle 101 übertragen. Zu diesem Zweck wird mittels des ersten Betätigungssystems 41 ein erster Drucktopf 43 bzw. mittels eines zweiten Betätigungssystems 51 ein zweiter Drucktopf 53 zur Schließung der jeweiligen Teilkupplung 40,50 axial verschoben.

Mit einem Kupplungsdeckel 110 der Mehrfachkupplungseinrichtung ist ein Gehäuse 111 fest verbunden, welches zur Aufnahme des Trennkupplungsbetätigungssystems 11 dient. Zwischen der Kupplungseingangswelle 130 und dem Gehäuse 111 ist ein erstes Rotationslager 120 angeordnet, und zwischen dem Gehäuse 111 und dem gemeinsamen Rotationsteil 80 ist ein zweites Rotationslager 121 angeordnet. Die Kupplungseingangswelle 130 wird insgesamt durch das erste Rotationslager 120 sowie ein axial daneben angeordnetes Nadellager 122 abgestützt.

Die gesamte Mehrfachkupplungseinrichtung ist über ein den Getriebeeingangswellen 100,101 zugewandtes Stützteil 140 sowie ein daran befindliches Stützlager 141 in Form eines Nadellagers gegen unbeabsichtigtes Verkippen gesichert.

Insgesamt stellt die vorliegende Erfindung eine Mehrfachkupplungseinrichtung zur Verfügung, die aufgrund der Anordnung der Kupplungen im Nassraum eine hohe Lebenserwartung mit einem radial gering bemessenen Bauraum aufweist.

### Bezugszeichenliste

- 1: Rotationsachse
- 10: Trennkupplung
- 11: Trennkupplungsbetätigungssystem
- 12: Kolben-Zylinder-Einheit
- 13: Radiale Erstreckung
- 20: Betätigungslager
- 21: Radialer Abstand der Umlaufbahn
- 22: Trennkupplung-Lamellenträger
- 30: Doppelkupplungsvorrichtung
- 40: erste Teilkupplung
- 41: erstes Betätigungssystem
- 42: erster Lamellenträger
- 43: erster Drucktopf
- 50: zweite Teilkupplung
- 51: zweites Betätigungssystem
- 52: zweiter Lamellenträger
- 53: zweiter Drucktopf
- 60: wirksamer Durchmesser
- 70: Getriebeelement
- 71: wirksamer Durchmesser
- 80: gemeinsames Rotationsteil
- 90: Nassraum
- 100: erste Getriebeeingangswelle
- 101: zweite Getriebeeingangswelle
- 110: Kupplungsdeckel
- 111: Gehäuse
- 120: erstes Rotationslager
- 121: zweites Rotationslager
- 122: Nadellager
- 130: Kupplungseingangswelle
- 140: Stützteil
- 141: Stützlager

## Patentansprüche

1. Mehrfachkupplungseinrichtung für ein Hybridmodul zum Ankoppeln einer Verbrennungskraftmaschine, umfassend:
eine Trennkupplung (10), mit der Drehmoment von der Verbrennungskraftmaschine auf die Mehrfachkupplungseinrichtung übertragbar ist und mit der die Mehrfachkupplungseinrichtung von der Verbrennungskraftmaschine trennbar ist; eine Doppelkupplungsvorrichtung (30), mit der Drehmoment von einer elektrischen Maschine und/ oder von der Trennkupplung (10) auf einen Antriebsstrang übertragbar ist, mit einer ersten Teilkupplung (40) und einer zweiten Teilkupplung (50); sowie ein Getriebeelement (70) zur Ausbildung eines Getriebes zwischen der elektrischen Maschine und der Mehrfachkupplungseinrichtung zwecks Übertragung einer Drehbewegung zwischen der elektrischen Maschine und der Mehrfachkupplungseinrichtung, wobei die einzelnen Kupplungen und das Getriebeelement in einem Nassraum (90) angeordnet sind.

2. Mehrfachkupplungseinrichtung nach Anspruch 1, **dadurch gekennzeichnet, dass** die Kupplungen (10,40,50) sowie das Getriebeelement (70) um eine gemeinsame Rotationsachse (1) koaxial angeordnet sind und der wirksame Durchmesser (71) des Getriebeelementes (70) größer ist als der wirksame Durchmesser (60) der mittels Reibschluss Drehmoment übertragenen Bestandteile einer jeweiligen Teilkupplung (40,50) der Doppelkupplungsvorrichtung (30).

3. Mehrfachkupplungseinrichtung nach einem der vorhergehenden Ansprüche, **dadurch gekennzeichnet, dass** die Trennkupplung (10) von der Doppelkupplungsvorrichtung (30) radial überlagert ist.

4. Mehrfachkupplungseinrichtung nach Anspruch 3, **dadurch gekennzeichnet, dass** die Trennkupplung (10) in Bezug zu der Doppelkupplungsvorrichtung (30) radial innen angeordnet ist und die beiden Teilkupplungen (40,50) der Doppelkupplungsvorrichtung (30) im Wesentlichen axial nebeneinander angeordnet sind.

5. Mehrfachkupplungseinrichtung nach einem der vorhergehenden Ansprüche, **dadurch gekennzeichnet, dass** die Mehrfachkupplungseinrichtung ein Trennkupplungsbetätigungssystem (11) zur Betätigung der Trennkupplung (10) aufweist, wobei das Trennkupplungsbetätigungssystem (11) eine im Wesentlichen ringförmige Kolben-Zylinder-Einheit (12) aufweist, deren Kolben im Wesentlichen axial translatorisch verschiebbar ist, und weiterhin ein ringförmiges Betätigungslager (20) aufweist, welches eine rotatorische Relativbewegung zwischen der Kolben-Zylinder-Einheit (12) und einem zu betätigenden Kupplungselement der Trennkupplung (10) erlaubt, und wobei die Kolben-Zylinder-Einheit (12) in oder an einem Gehäuse (111) aufgenommen ist, welches mechanisch fest mit einem Kupplungsdeckel (110) der Mehrfachkupplungseinrichtung verbunden ist, wobei am Gehäuse (111) ein erstes Rotationslager (120) angeordnet ist zur rotatorischen Lagerung einer Kupplungseingangswelle (130), sowie ein zweites Rotationslager (121) angeordnet ist zur rotatorischen Lagerung eines gemeinsamen Rotationsteils (80) der Kupplungen (40,50) der Mehrfachkupplungseinrichtung, und wobei die ringförmige Kolben-Zylinder-Einheit (12) radial zwischen dem ersten Rotationslager (120) und dem zweiten Rotationslager (121) angeordnet ist.

6. Mehrfachkupplungseinrichtung nach einem der vorhergehenden Ansprüche, **dadurch gekennzeichnet, dass** die Mehrfachkupplungseinrichtung ein erstes Betätigungssystem (41) zur Betätigung der ersten Teilkupplung (40) und ein zweites Betätigungssystem (51) zur Betätigung der zweiten Teilkupplung (50) aufweist, wobei das erste Betätigungssystem (41) und das zweite Betätigungssystem (51) einander radial zumindest abschnittsweise überlagern.

7. Mehrfachkupplungseinrichtung nach Anspruch 6, **dadurch gekennzeichnet, dass** die Mehrfachkupplungseinrichtung ein Stützlager (141) aufweist, welches entlang der Rotationsachse (1) an der Seite der Position des ersten Betätigungssystems (41) und des zweiten Betätigungssystems (51) angeordnet ist, vorzugsweise vom ersten Betätigungssystem (41) und zweiten Betätigungssystem (51) radial überdeckt ist, und welches auf einer Getriebeeingangswelle (100,101) abgestützt oder abstützbar ist.

8. Mehrfachkupplungseinrichtung nach einem der vorhergehenden Ansprüche, **dadurch gekennzeichnet, dass** das Getriebeelement (70):
a) ein Kettenrad zur Ausbildung eines Kettentriebes,
b) ein Riemenrad zur Ausbildung eines Riementriebes, oder
c) ein Zahnrad zur Ausbildung eines Zahnradgetriebes ist.

9. Hybridmodul, umfassend eine Mehrfachkupplungseinrichtung nach einem der Ansprüche 1 bis 8 sowie eine elektrische Maschine zur Erzeugung eines Antriebsdrehmoments mit einem Rotor, wobei der Rotor in Bezug zur Rotationsachse 1 der Mehrfachkupplungseinrichtung achsparallel angeordnet ist und mittels eines Getriebes, welches das Getriebeelement (70) der Mehrfachkupplungseinrichtung umfasst, mit der Mehrfachkupplungseinrichtung verbunden ist.

10. Hybridmodul nach Anspruch 9, dass der Rotor der elektrischen Maschine außerhalb des Nassraums (90) angeordnet ist und mit einem weiteren Getriebeelement rotationsfest verbindbar oder verbunden ist, welches zusammen mit dem Getriebeelement (70) der Mehrfachkupplungseinrichtung das Getriebe ausbildet, und dass das weitere Getriebeelement ebenfalls im Nassraum (90) angeordnet ist und zwischen dem weiteren Getriebeelement und dem Rotor der elektrischen Maschine eine Dichtung zur Abdichtung des Nassraums (90) angeordnet ist.

## Claims

1. A multi-clutch system for a hybrid module for coupling an internal combustion engine, comprising:
a disconnect clutch (10), with which torque can be transmitted from the internal combustion engine to the multi-clutch system and with which the multi-clutch system can be disconnected from the internal combustion engine; a dual clutch device (30), with which torque can be transmitted from an electrical machine and/or from the disconnect clutch (10) to a drive train, having a first partial clutch (40) and a second partial clutch (50); and a transmission element (70) for forming a transmission between the electrical machine and the multi-clutch system to transmit a rotational movement between the electrical machine and the multi-clutch system, wherein the individual clutches and the transmission element are arranged in a wet space (90).

2. The multi-clutch system according to claim 1, **characterised in that** the clutches (10, 40, 50) and the transmission element (70) are arranged coaxially about a common axis of rotation (1) and the effective diameter (71) of the transmission element (70) is larger than the effective diameter (60) of the components of a respective partial clutch (40, 50) of the dual clutch device (30) transmitted by means of frictional torque.

3. The multi-clutch system according to any one of the preceding claims, **characterised in that** the disconnect clutch (10) is radially overlapped by the dual clutch device (30).

4. The multi-clutch system according to claim 3, **characterised in that** the disconnect clutch (10) is arranged radially inwardly in relation to the dual clutch device (30) and the two partial clutches (40, 50) of the dual clutch device (30) are arranged essentially axially next to one another.

5. The multi-clutch system according to any one of the preceding claims, **characterised in that** the multi-clutch system has a disconnect clutch actuation system (11) for actuating the disconnect clutch (10), wherein the disconnect clutch actuation system (11) has a substantially annular piston-cylinder unit (12), the piston of which is essentially axially translationally displaceable, and further has an annular actuation bearing (20), which allows a rotational relative movement between the piston-cylinder unit (12) and a coupling element of the disconnect clutch (10) to be actuated, and wherein the piston-cylinder unit (12) is accommodated in or on a housing (111), which is mechanically firmly connected to a clutch cover (110) of the multi-clutch system, wherein a first rotary bearing (120) is arranged on the housing (111) for the rotational bearing of a clutch input shaft (130), and a second rotary bearing (121) is arranged for the rotational bearing of a common rotary part (80) of the clutches (40, 50) of the multi-clutch system, and wherein the annular piston-cylinder unit (12) is arranged radially between the first rotary bearing (120) and the second rotary bearing (121).

6. The multi-clutch system according to any one of the preceding claims, **characterised in that** the multi-clutch system has a first actuation system (41) for actuating the first partial clutch (40) and a second actuation system (51) for actuating the second partial clutch (50), wherein the first actuation system (41) and the second actuation system (51) overlap one another radially at least in sections.

7. The multi-clutch system according to claim 6, **characterised in that in that** the multi-clutch system has a support bearing (141) arranged along the axis of rotation (1) on the side of the position of the first actuation system (41) and the second actuation system (51), is preferably radially covered by the first actuation system (41) and the second actuation system (51), and is supported or can be supported on a transmission input shaft (100, 101).

8. The multi-clutch system according to any one of the preceding claims, **characterised in that** the transmission element (70) is:
a) a chain wheel for forming a chain drive,
b) a belt wheel for forming a belt drive, or
c) is a gear wheel for forming a gear transmission.

9. A hybrid module, comprising a multi-clutch system according to any one of claims 1 to 8 and an electrical machine for generating a drive torque with a rotor, wherein the rotor is arranged axis-parallel with respect to the axis of rotation 1 of the multi-clutch system and is connected to the multi-clutch system by means of a transmission comprising the transmission element (70) of the multi-clutch system.

10. The hybrid module according to claim 9, in that the rotor of the electrical machine is arranged outside the wet space (90) and is connected or can be connected in a rotationally fixed manner to a further transmission element, which forms the transmission together with the transmission element (70) of the multi-clutch system, and that the further transmission element is also arranged in the wet space (90) and a seal for sealing the wet space (90) is arranged between the further gear element and the rotor of the electrical machine.

## Revendications

1. Système d'embrayage multiple pour un module hybride destiné au couplage d'un moteur à combustion interne, comprenant :
un embrayage de séparation (10) avec lequel un couple peut être transmis du moteur à combustion interne au système d'embrayage multiple et avec lequel le système d'embrayage multiple peut être séparé du moteur à combustion interne ; un dispositif à double embrayage (30), avec lequel un couple peut être transmis d'une machine électrique et/ou de l'embrayage de séparation (10) à une chaîne cinématique, avec un premier embrayage partiel (40) et un second embrayage partiel (50) ; et un élément de transmission (70) pour former une transmission entre la machine électrique et le système d'embrayage multiple dans le but de transmettre un mouvement de rotation entre la machine électrique et le système d'embrayage multiple, les embrayages individuels et l'élément de transmission étant agencés dans un espace humide (90).

2. Système d'embrayage multiple selon la revendication 1, **caractérisé en ce que** les embrayages (10, 40, 50) et l'élément de transmission (70) sont agencés coaxialement autour d'un axe de rotation (1) commun et le diamètre efficace (71) de l'élément de transmission (70) est plus grand que le diamètre efficace (60) des composants d'un embrayage partiel (40, 50) respectif du dispositif à double embrayage (30) qui transmettent le couple par friction.

3. Système d'embrayage multiple selon l'une quelconque des revendications précédentes, **caractérisé en ce que** l'embrayage de séparation (10) est superposé radialement au dispositif à double embrayage (30).

4. Système d'embrayage multiple selon la revendication 3, **caractérisé en ce que** l'embrayage de séparation (10) est agencé radialement vers l'intérieur par rapport au dispositif à double embrayage (30) et les deux embrayages partiels (40, 50) du dispositif à double embrayage (30) sont agencés essentiellement axialement les uns à côté des autres.

5. Système d'embrayage multiple selon l'une quelconque des revendications précédentes, **caractérisé en ce que** le système d'embrayage multiple présente un système d'actionnement d'embrayage de séparation (11) pour actionner l'embrayage de séparation (10), le système d'actionnement d'embrayage de séparation (11) présentant une unité piston-cylindre (12) sensiblement annulaire, dont les pistons sont essentiellement déplaçables axialement en translation, et présente en outre un palier d'actionnement annulaire (20), qui permet un mouvement relatif de rotation entre l'unité piston-cylindre (12) et un élément d'accouplement à actionner de l'embrayage de séparation (10), et l'unité piston-cylindre (12) étant logée dans ou sur un boîtier (111), qui est mécaniquement relié de manière fixe à un couvercle d'embrayage (110) du système d'embrayage multiple, un premier palier de rotation (120) étant agencé sur le boîtier (111) pour le montage en rotation d'un arbre d'entrée d'embrayage (130), et un second palier de rotation (121) est agencé pour le montage en rotation d'une pièce de rotation commune (80) des embrayages (40, 50) du système d'embrayage multiple, et l'unité piston-cylindre annulaire (12) étant agencé radialement entre le premier palier de rotation (120) et le second palier de rotation (121).

6. Système d'embrayage multiple selon l'une quelconque des revendications précédentes, **caractérisé en ce que** le système d'embrayage multiple présente un premier système d'actionnement (41) pour actionner le premier embrayage partiel (40) et un second système d'actionnement (51) pour actionner le second embrayage partiel (50), le premier système d'actionnement (41) et le second système d'actionnement (51) se superposant radialement au moins par sections.

7. Système d'embrayage multiple selon la revendication 6, **caractérisé en ce que** le système d'embrayage multiple présente un palier d'appui (141) qui est agencé le long de l'axe de rotation (1) du côté de la position du premier système d'actionnement (41) et du second système d'actionnement (51), de préférence recouvert radialement par le premier système d'actionnement (41) et le second système d'actionnement (51), et qui est supporté ou peut être supporté sur un arbre d'entrée de transmission (100, 101).

8. Système d'embrayage multiple selon l'une quelconque des revendications précédentes, **caractérisé en ce que** l'élément de transmission (70) est :
a) un pignon pour former un entraînement par chaîne,
b) une roue à courroie pour former un entraînement par courroie, ou
c) un engrenage pour former une transmission par engrenage.

9. Module hybride comprenant un système d'embrayage multiple selon l'une quelconque des revendications 1 à 8 ainsi qu'une machine électrique pour générer un couple d'entraînement avec un rotor, le rotor étant agencé parallèlement à l'axe par rapport à l'axe de rotation 1 du système d'embrayage multiple et étant relié au système d'embrayage multiple au moyen d'une transmission qui comprend l'élément de transmission (70) du système d'embrayage multiple.

10. Module hybride selon la revendication 9, dans lequel le rotor de la machine électrique est agencé à l'extérieur de l'espace humide (90) et peut être relié ou est relié de manière fixe en rotation à un autre élément de transmission qui forme la transmission conjointement avec l'élément de transmission (70) du système d'embrayage multiple, et en ce que l'autre élément de transmission est également agencé dans l'espace humide (90) et un joint d'étanchéité pour l'étanchéité de l'espace humide (90) est agencé entre l'autre élément de transmission et le rotor de la machine électrique.
